# EUROPÄISCHE PATENTSCHRIFT

(11) **EP 2 088 052 B1**
(45) Veröffentlichungstag und Bekanntmachung des Hinweises auf die Patenterteilung: **01.07.2015**
(21) Anmeldenummer: 09000842.6
(22) Anmeldetag: 22.01.2009
(51) Int. Cl.: H04L 12/40

(54) **Kommunikationsinfrastruktur für sicherheitsrelevante Anwendungen**
Communication infrastructure for security-relevant applications
Infrastructure de communication pour applications relevant de la sécurité

(30) Priorität: 05.02.2008 DE 102008006670
(43) Veröffentlichungstag der Anmeldung: 12.08.2009
(73) Patentinhaber: DB Netz AG, 60468 Frankfurt am Main (DE)
(72) Erfinder: Bock, Hans Hermann, 10437 Berlin (DE)
(74) Vertreter: Zinken-Sommer, Rainer

(56) Entgegenhaltungen:
- EP-A1- 1 615 386
- US-A1- 2002 007 452
- US-B1- 6 792 532

## Beschreibung

Die Erfindung betrifft eine Kommunikationsinfrastruktur für Daten sicherheitsrelevanter Anwendungen im Bereich der Leit- und Sicherungstechnik (LST) von schienengebundenem Verkehr mit Hilfe eines offenen Übertragungssystems. Sie dient dazu, alle Sicherheitsanforderungen des Bahnbetriebs wirtschaftlich abzudecken.

Grundlage der sicheren Steuerung und Überwachung der Infrastruktur von schienengebundenem Verkehr ist eine sichere Kommunikationsinfrastruktur, mit der die Überwachungs- und Steuerungsdaten zwischen den einzelnen Komponenten übertragen werden. Die Übertragung der Daten muss dabei in einer "gesicherten Verbindung" erfolgen und gleichzeitig rückwirkungsfrei gegenüber der LST sein.

Ein Schwerpunkt liegt auf der formalen Sicherheit und deren Nachweis und der Einhaltung im späteren Dauerbetrieb.

Ein weiterer Schwerpunkt liegt im Lebenszyklusprozess, der angefangen beim Entwurf, über Planungsphasen, Installation und Abnahme, den Betrieb mit Instandhaltung bis zum Rückbau betrachtet wurde.

Die Kommunikationsinfrastruktur berücksichtigt von vornherein die Betriebsführung von Netzwerk, Sicherheitsschale und Anwendungen und deren Verzahnung untereinander. Dies ist notwendig, weil wesentliche Parameter der Sicherheitsnachweise im laufenden Betrieb überwacht und protokolliert werden müssen. Durch die Systemarchitektur, die konkrete Ausprägung der Sicherheits-Module und die Sicherheitsbetriebsführung ist die aktuelle Sicherheitslage jederzeit bekannt.

Die derzeitigen Kommunikationsinfrastrukturen verwenden proprietäre Lösungen, die keine Möglichkeit bieten, Systeme verschiedener Hersteller miteinander zu kombinieren. Auch werden keine standardisierten Übertragungsprotokolle und Kommunikationssysteme in den heutigen LST-Applikationen verwendet. Das hat eine aufwendige Betriebsführung zur Folge, bei der es weder ein zentrales Schlüsselmanagement noch eine zentrale Fehlererkennung bzw. Wartung, noch eine zentrale Darstellung der Sicherheitslage gibt.

Aufgrund der ungenügenden Vereinheitlichung existiert keine einheitliche und durchgängige Lösung zur sicheren Kommunikation der LST-Applikationen. Außerdem besteht wegen der fehlenden Modularisierung der LST-Applikationen keine Möglichkeit, um eine sichere Kommunikationsplattform zu nutzen.

So wird beispielsweise im Stand der Technik die Kommunikation zwischen einer Unterzentrale (UZ) eines ESTW und der Betriebszentrale mit Hilfe eines angemieteten Übertragungswegs in einem offenen Netz nach EN 50159-2 realisiert, der durch Security Gateways gesichert wird.

Dies alles führt zu hohen Kosten für die heutigen Lösungen.

In DE 10 2005 043 305 A1 ist eine System-Architektur zur Steuerung und Überwachung von Komponenten einer Eisenbahnsicherungsanlage beschrieben. Hierbei ist eine Automatisierungsplattform, die mehrere Module, insbesondere CPU, Stromversorgung, Modul für sicherheitsrelevante Signalverarbeitung, Modul für nicht sicherheitsrelevante Signalverarbeitung, Kommunikationsmodul, umfasst, über spezielle Schnittstellen mit sicherheitsrelevanten und nicht sicherheitsrelevanten Komponenten der Eisenbahnsicherungsanlage verbunden. Als Automatisierungsplattform dient eine speicherprogrammierbare Steuerung (SPS). Die vorgegebene Softwarestruktur der Automatisierungsplattform ist üblicherweise derart modular oder hierarchisch geordnet, dass die Logistik der Eisenbahnsicherungsanlage, insbesondere die Stellwerkslogistik, in funktionsspezifischen Softwareprogrammen organisiert werden kann.

Nachteil des oben beschriebenen Stands der Technik ist, dass zwar eine Verbindung zwischen dem Stellwerk und den Komponenten der Außenanlage verwirklicht wird, aber keine Verbindung zwischen zentralen oder dezentralen Eisenbahnsicherungsanlagen untereinander.

Die EP 1 615 386 A1 beschreibt ein Firewall-System zum Schutz einer Gerätegruppe, ein am System teilnehmendes Gerät und ein Verfahren zur Aktualisierung der Firewall-Regeln innerhalb des Systems. Die Geräte nutzen gemeinsam eine globale Sicherheitsregel und sind über Listen über die Mitglieder der Gemeinschaft informiert. In jedem Gerät der Gemeinschaft werden Regeln für ein Filter der für das Netz, mit dem sie verbunden sind, bestimmten und von ihm ausgehenden Nachrichten berechnet. Dadurch wird auf jedem Anwendungslevel eine dezentralisierte Verwaltung der Firewall ermöglicht, die dynamisch auf Veränderungen des eigenen Netzes reagiert.

Es ist somit Aufgabe der Erfindung, eine modularisierte, standardisierte, hochwertige und kostengünstige Kommunikationsinfrastruktur bereitzustellen, die es ermöglicht,
- monolithische Systeme in kleinere Module aufzuspalten,
- unterschiedliche Innovationszyklen in den einzelnen Modulen zu unterstützen,
- Innovationsgeschwindigkeiten in den Technologien LST- und TK-Infrastruktur zu entkoppeln,
- unterschiedliche Lieferanten für die einzelnen Modulen zu nutzen,
- die einzelnen Module über Standardschnittstellen zu verbinden,
- die sichere Kommunikation zwischen den Modulen zu adressieren,
- marktgängige Module zu verwenden,
- marktgängige Schnittstellen zwischen den Modulen zu verwenden, damit Module unabhängig voneinander weiterentwickelt werden können,
- eine zentrale Betriebsführung aller Elemente der Architektur durchzuführen, wodurch ein proaktives Management möglich wird,
- die zentrale Betriebsführung jederzeit über den Zustand der sicheren Kommunikationswege in Kenntnis zu setzen.

Diese Aufgabe wird gemäß den Merkmalen des Patentanspruchs 1 gelöst.

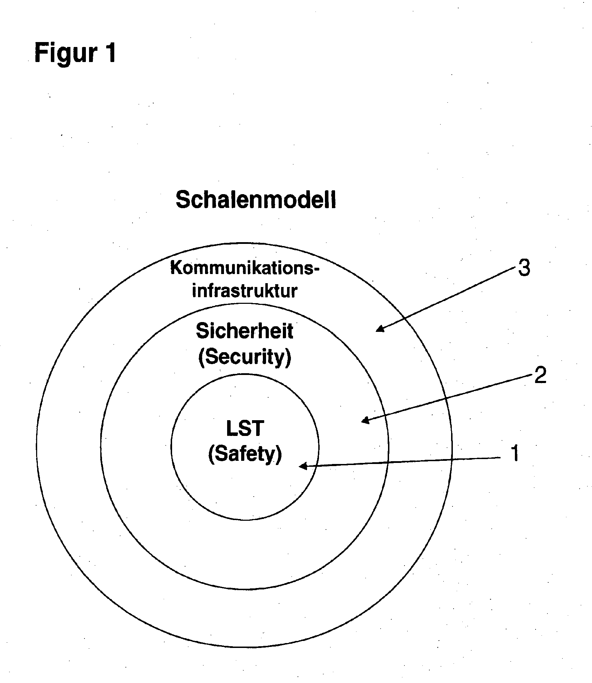

Im bildlichen Kern (s. Fig. 1) des Schalenmodells der erfindungsgemäßen Kommunikationsinfrastruktur steht eine Anwendung der LST. Sie ist im Sinne der EN 50159-1 in sich geschlossen und hat keinen Kontakt zu anderen Systemen. Alle Elemente sind bekannt. Als Beispiele für LST-Applikationen stehen ESTW-Z, ESTW-A, sicherheitsrelevante Kommunikation in den Meldeanlagensystemen (MAS90), Steuerbezirke der Betriebszentralen einschl. Anwendungen und das RBC des ETCS.

Die einzelnen Kerne bleiben im Sinne der Safety autark.

Damit die verteilten Anwendungskomponenten der LST miteinander kommunizieren können, werden Kommunikationsverbindungen benötigt. Diese müssen, wenn sie nicht über ein geschlossenes Netzwerk geführt werden können, unter zusätzlichen Sicherungsmaßnahmen über ein offenes Netzwerk geführt werden. Die erfindungsgemäße Kommunikationsinfrastruktur liefert dafür die Sicherheitsarchitektur.

Die Aufgaben von Anwendung, Netzwerk und Sicherheit sind klar auf die entsprechenden drei bildlichen "Schalen" verteilt. Die Schnittstellen zwischen den Schalen sind eindeutig definiert, so dass die konkrete Realisierung einer Schale für die anderen Schalen irrelevant wird, so lange die Schnittstelle entsprechend der Definition bedient wird. Dies ermöglicht auch die unabhängige Weiterentwicklung der einzelnen Schalen. Die Definition einer Schnittstelle umfasst auch betriebliche Parameter und Methoden zur Qualitätssicherung, die die Einhaltung der definierten Parameter überprüfbar macht.

Der Begriff Sicherheit lässt sich in zwei Disziplinen aufteilen, die mit Safety und Security bezeichnet werden. Im Deutschen gibt es keine Entsprechungen, weshalb diese englischen Begriffe beibehalten werden. In der Safety geht es darum, Systeme gegen Fehler zu sichern, die im laufenden Betrieb zum Beispiel durch Defekte oder Störeinstrahlung verursacht werden. Der Bereich Security hingegen sichert ein System gegen absichtliche Angriffe zum Beispiel durch gezielte Störung (denial of services) oder durch gezielte Veränderung einer Kommunikation, aber auch unabsichtliche Zugriffe.

Die erfindungsgemäße Kommunikationsinfrastruktur betrifft den Bereich Security, wohingegen die Anwendung weiterhin den Bereich Safety behandeln muss. Eine Anwendung, die die erfindungsgemäßen Kommunikationsverbindungen nutzt, braucht daher keine Vorsorge gegenüber Angriffen und Abhören zu treffen. Die Projektierung und Konfigurierung der Kommunikationsinfrastruktur wird in Abhängigkeit des Netzwerkes (offen oder geschlossen) bestimmt. Da die erfindungsgemäße Kommunikationsinfrastruktur alle Belange der Security erfüllt, wird die Anwendungsentwicklung erleichtert bzw. um den Teil der Security reduziert. Die Anwendung kann unabhängig von der Nutzung offener oder geschlossener Netzwerke gleich entwickelt werden. Dies ist ein weiterer Schritt zur Modularisierung der LST-Applikationen.

Die Funktionen der LST-Applikation bestimmen die Anforderungen der Safety. Sie müssen durch die LST-Applikationen realisiert werden, Sie sind auch bei Kommunikationsbeziehungen in geschlossenen Netzwerken erforderlich, die ohne die Security-Merkmale der Kommunikationsinfrastruktur auskommen. Dadurch ist sichergestellt, dass nicht unterschiedliche Versionen einer LST-Applikation für offene und geschlossene Netzwerke entwickelt werden müssen. Die Kommunikationsinfrastruktur selber umfasst ebenfalls einen Safety-Anteil, der das Funktionieren der Sicherheitsschale sicherstellt. Dieser Safety-Anteil ist jedoch unabhängig von den Safety-Funktionen der LST-Applikation erforderlich.

Da sowohl offene als auch geschlossene Netzwerke in der LST betrieben werden, muss die Kommunikationsinfrastruktur beide Netzwerkklassen unterstützen.

Die erfindungsgemäße Kommunikationsinfrastruktur ist auf das komplette System Bahn ausgelegt. Dies gilt für die Kopplung von Betriebszentralen genauso, wie für die informationstechnische Anbindung von signaltechnischen Außenanlagen an ein Stellwerk.

Die erfindungsgemäße Kommunikationsinfrastruktur legt eine Sicherheitsschale fest, die im Wesentlichen durch die zugehörigen Module realisiert wird. Hinzu kommt die Betriebsführung. Die Kommunikationsinfrastruktur setzt auf dem unterliegenden Netzwerk auf und stellt Funktionen für die LST-Applikationen zur Verfügung.

Die Basis für die Architektur der erfindungsgemäßen Kommunikationsinfrastruktur bilden die Module, welche die Funktionen der Security-Schale realisieren. Dabei ist es unwesentlich, ob das Modul als dedizierte Hardware oder als Softwareinstanz auf einem anderen System implementiert wird. Das Modul deckt generisch alle Anwendungsfälle ab.

Die Module sichern Kommunikationsverbindungen eines standardisierten Netzwerkes/Übertragungsweges, welches über standardisierte Schnittstellen bereitgestellt wird. Die Module wirken immer in einer Paarbeziehung und sind deshalb an jedem Endpunkt eines zu sichernden Kommunikationsweges oder an den Netzzugangspunkten vorgesehen. Die gesicherten Kommunikationsverbindungen werden den LST-Applikationen zur Verfügung gestellt. Die Übergabe erfolgt über standardisierte Schnittstellen. Einige LST-Applikationen müssen dahingehend weiterentwickelt werden, dass sie diese Schnittstellen unterstützen. Andere, meistens neuere LST-Applikationen, wie zum Beispiel ETCS, unterstützen diese bereits.

Das Kommunikationsinfrastruktur-Modul besteht aus den vier Funktionseinheiten Krypto-Modul, dem LST-Modul (Schnittstelle zur LST-Anwendung), der Schnittstelle zur Kommunikationsinfrastruktur (TK-Modul) und der Schnittstelle zur Betriebsführung (Betriebsführungsmodul).

Die Kernfunktion des erfindungsgemäßen Kommunikationsinfrastruktur-Moduls ist es, eine sichere Kommunikation zwischen sicherheitsrelevanten Bereichen sicherzustellen. Dabei ist zum einen zu gewährleisten, dass nur zulässige Kommunikationsbeziehungen ermöglicht werden. Das Krypto-Modul arbeitet hier als "Firewall", welche nur definierte Kommunikationspartner über definierte Protokolle kommunizieren lässt. Zum anderen wird durch das Krypto-Modul sichergestellt, dass zulässige Kommunikationsverbindungen gegen Angriffe und Manipulationen geschützt werden (verschlüsselte Verbindung entsprechend den Anerkannten Regeln der Technik). Für letztere Funktion wird das Kommunikationsinfrastruktur-Modul immer paarweise eingesetzt.

Das LST-Modul dient der Adaption des Kommunikationsinfrastruktur-Moduls an eine LST-Applikation. Da das Kommunikationsinfrastruktur-Modul nur über standardisierte Schnittstellen verfügt, kann hier ggf. noch ein Schnittstellenkonverter eingesetzt werden. Da die Hauptfunktion des Kommunikationsinfrastruktur-Moduls die Sicherung der LST-Applikation ist, stellt das LST-Modul sicher, dass die LST-Applikation über eine Fehlfunktion des Kommunikationsinfrastruktur-Moduls informiert wird, damit hier entsprechend reagiert werden kann (Fehleroffenbarung).

Über das TK-Modul wird das Kommunikationsinfrastruktur-Modul über marktgängige Schnittstellen mit einem Telekommunikationsnetzwerk verbunden. Je nach Art der Schnittstelle wird der Status des Telekommunikationsnetzwerks dem Kommunikationsinfrastruktur-Modul mitgeteilt.

Das Betriebsführungsmodul dient der Konfiguration, Fernüberwachung und Statusabfrage des Kommunikationsinfrastruktur-Moduls durch die Sicherheitsbetriebsführung. Von der Betriebsführung aus wird das Kommunikationsinfrastruktur-Modul konfiguriert, wobei die Erstinstallation und laufende Konfigurationsänderungen, wie zum Beispiel ein Schlüsselupdate unterschieden werden. Weiterhin wird regelmäßig der Status des Kommunikationsinfrastruktur-Moduls abgefragt, um proaktiv auf Fehler reagieren zu können.

Das Kommunikationsinfrastruktur-Modul ist in der Lage, der Betriebsführung regelmäßig seinen Status und insbesondere Fehlerzustände entsprechend aufgestellter Risikoszenarien zu melden. Das kann automatisch oder auf Anforderung ausgeführt werden, um Gefährdungs- und Störungssituationen für die Entscheidungsprozesse des Sicherheitsmanagements bewusst zu qualifizieren. Die Datenmenge ist durch sinnvolle Verdichtung im Kommunikationsinfrastruktur-Modul begrenzt.

Da über diese Schnittstelle sicherheitsrelevante Konfigurationen verändert werden können, ist die Kommunikation zwischen Kommunikationsinfrastruktur-Betriebsführung und Kommunikationsinfrastruktur-Modul ebenfalls gegen Angriffe und Manipulationen gesichert. Weiterhin stellen geeignete Verfahren sicher, dass sich Betriebsführung und Modul gegenseitig authentisieren und nur in diesem Fall eine Kommunikationsverbindung etabliert wird.

Neben den vier Funktionsmodulen mit ihren Meldewegen für Status- und Fehlermeldungen ist der Kommunikationspfad für den Nutzdatenstrom der eigentliche Zweck des Kommunikationsinfrastruktur-Moduls. Der Nutzdatenstrom des Kommunikationsinfrastruktur-Moduls durchläuft das Kommunikationsinfrastruktur-Modul vom LST-Modul, über das Krypto-Modul hin zum TK-Modul. Dabei werden die ungesicherten Daten der LST-Applikation vom LST-Modul in Empfang genommen, vom Krypto-Modul verschlüsselt und vom TK-Modul gesichert an die Kommunikationsinfrastruktur weitergeleitet. An der Gegenstelle wird der Weg in umgekehrter Richtung durchlaufen.

Die Kommunikationsinfrastruktur-Module werden immer paarweise eingesetzt. Dabei kann ein physisches Kommunikationsinfrastruktur-Modul aus wirtschaftlichen Gründen mehrere gesicherte Kanäle terminieren (Konzentratorfunktion). Um die Wirkung der Sicherheitsschale der Kommunikationsinfrastruktur-Architektur nicht zu unterlaufen, erfolgt der Zugang zu LST-Applikationen, die bereits durch die Kommunikationsinfrastruktur gesichert werden, grundsätzlich über Kommunikationsinfrastruktur-Module.

Um hohe Verfügbarkeitsanforderungen von LST-Applikation erfüllen zu können, unterstützt die Kommunikationsinfrastruktur-Architektur Redundanzschaltungen.

Die Kommunikationsinfrastruktur-Architektur ist so definiert, dass die Module auch die Kommunikation zwischen Feldelementen und Stellwerken sichern können. In diesem Fall werden Kommunikationsinfrastruktur-Module in teilweise bahntypischen, extremen Umgebungen eingesetzt.

Das Kommunikationsinfrastruktur-Modul stellt den LST-Applikationen alle notwendigen Security-Funktionen über eine Schnittstelle zur Verfügung. Dies vereinfacht die Entwicklung von LST-Applikationen, da die Sicherung von Kommunikationsverbindungen durch das Modul realisiert wird. Gleichzeitig ist die Kommunikationsschnittstelle unabhängig vom Sicherheitsbedarf einheitlich spezifiziert, was die Erstellung von Lastenheften und Ausschreibungen vereinfacht. Dies führt zu einer Modularisierung der LST-Applikationen. Die LST-Applikation muss jedoch weiter die Safety-Funktionen realisieren.

Das Kommunikationsinfrastruktur-Modul sichert Verbindungen in unterschiedlichen Leistungs- und Verfügbarkeitsklassen und stellt diese der LST-Applikation als gesicherte Verbindung zur Verfügung.

Die gesicherten Kommunikationsverbindungen werden kontinuierlich überwacht und bei Bedarf entstört, wobei sich die Entstördauer nach den Verfügbarkeitsklassen richtet. Mögliche Fehlerzustände werden der LST-Applikation über die Schnittstelle offenbart.

Um von den Vorteilen der Kommunikationsinfrastruktur-Architektur zu profitieren und das Kommunikationsinfrastruktur-Modul nutzen zu können, müssen die LST-Applikationen entsprechend angepasst werden (Beispiel: ältere Verfahren, die Einfach-Frequenz-Übertragung (EF) nutzen).

Dies geschieht bei neuen Entwicklungen, wie zum Beispiel ETCS, automatisch, muss aber bei jedem Projekt im LST-Umfeld berücksichtigt werden. Bestehende LST-Applikationen können angepasst werden, wenn dies wirtschaftlich ist.

Das technische Ziel der Kommunikationsinfrastruktur-Architektur ist die Integration der sicherheitsrelevanten Anwendungen auf einer einheitlichen Kommunikationsinfrastruktur der Deutschen Bahn AG, die die hoheitlichen Interessen der Bundesrepublik Deutschland sicherstellt.

Die erfindungsgemäße Kommunikationsinfrastruktur versteht sich nicht nur als die Transportinfrastruktur von Daten der LST-Applikationen über IPsecverschlüsselte Tunnel. Auch wenn IP die Kommunikationstechnik für die heutige Telekommunikationsindustrie ist, gibt es neben IP auch weitere Technologien, die weiter verfolgt werden müssen.

Die Deutsche Bahn AG verfügt über unterschiedliche technische Ressourcen. Dazu gehören Kabelführungssysteme, Kupfer- und Lichtwellenleiterkabel unterschiedlicher Qualitäten, Längen, Alters und Adern bzw. Fasern, die sich nahtlos in dieses Konzept einordnen lassen.

Durch die erfindungsgemäße Kommunikationsinfrastruktur ist eine Architektur gewährleistet, mit der sicherheitsrelevante Anwendungen auf einer einheitlichen Infrastruktur zusammen mit anderen Anwendungen sicher und rückwirkungsfrei betrieben werden können. Dies hat nicht nur Auswirkungen auf die eingesetzten Technologien, sondern auch auf Inbetriebnahme, Überwachung und Instandhaltung der Systeme. Die Kommunikationsinfrastruktur-Architektur beinhaltet die Funktion, die Unverlierbarkeit von Eigenschaften mit geeigneten Mitteln permanent zu überwachen.

Im Gegensatz zu den bisher im Einsatz befindlichen Systemen kann die gesamte Sicherheitsarchitektur zentral betrieben werden. Hierdurch wird zum einen die Betriebsqualität verbessert und zum anderen die Kosten niedrig gehalten. Die Zentralisierung ermöglicht einen Vierundzwanzigstundenbetrieb. Weiterhin ist damit gewährleistet, dass umfangreiche Maßnahmen zur Sicherung der Betriebsführung vorgenommen werden.

Da auch die Generierung und Verteilung von Passwörtern und Zertifikaten betroffen ist, wird hier ein neuer Weg beschritten, der bei den früheren Zulassungen nicht vorgesehen war, da zu dem Zeitpunkt keine sicheren Verfahren vorhanden waren.

Die erfindungsgemäße Kommunikationsinfrastruktur-Betriebsführung beinhaltet alle logischen Funktionen zur Betriebsführung der Sicherheitsschale der Kommunikationsinfrastruktur-Architektur.

Die Kommunikationsinfrastruktur-Betriebsführung steht dabei nicht isoliert da, sondern ist mit den Betriebsführungen der Kommunikationsinfrastruktur (TK-Betriebsführung) und der LST-Applikationen über möglichst weit automatisierte Schnittstellen verbunden. Über diese Schnittstellen werden Ereignisse und Störungsmeldungen ausgetauscht. So kann zum Beispiel die Sicherheitsbetriebsführung von der TK-Betriebsführung über einen Leitungsausfall und den Status der Instandsetzung informiert werden und muss nicht unnötig eigenes Personal zum betroffenen Modul schicken. Gleichzeitig kann die AVI-Stelle Anwendungsbetriebsführung unterrichtet werden, die wiederum die betroffenen Kunden, z. B einen Fahrdienstleiter, unterrichtet.

Das Ereignismanagement erfasst sämtliche Ereignisse der Sicherheitsschale.

Hierzu gehören zum Beispiel die regelmäßigen Statusmeldungen, Auslastungsmedlungen, aber auch Störungsereignisse. Die Störungsereignisse werden im Störungsmanagement weiterbearbeitet. Dazu wird zu jedem Störungsereignis eine Störungsmeldung erstellt, in der sämtliche Maßnahmen zur Störungsbeseitigung mit zeitlichen Ablauf und beteiligten Personen dokumentiert werden. Die Störungsmeldung schließt mit Beseitigung der Störung.

Neben den beiden übergeordneten Funktionen Ereignis- und StörungsManagement ist auch das Berichtswesen angesiedelt, das sämtliche Ereignisse und deren Zeitverlauf aufbereitet. Die generierten Berichte dokumentieren zum Beispiel die Sicherheitslage oder geben Aufschluss über die Verfügbarkeit einzelner Verbindungen oder Verbindungsklassen. Weiterhin können hierüber Fehlerhäufigkeiten dokumentiert werden.

Die drei Funktionen Ereignis-, Störungsmanagement und Berichtswesen greifen auf die Kernfunktionen der Sicherheitsbetriebsführung zu. Die Kernfunktionen der Betriebsführung umfassen das Schlüssel- und Konfigurationsmanagement, den Status und die Sicherheitslage, die Frühwarnung, die Dokumentation und Datensicherung und Wiederanlauf.

Das Schlüsselmanagement stellt alle Funktionen zur Verwaltung und Verteilung aller Schlüssel und Zertifikate in der Sicherheitsschale zur Verfügung. Hierzu gehören die Generierung von Schlüssel und der Rücknahme, die Verwaltung von Black-Lists usw. Hierzu wird eine Public Key Infrastructure - PKI aufgebaut.

Das Konfigurationsmanagement verwaltet die Konfigurationen aller Kommunikationsinfrastruktur-Module und die darauf konfigurierten Kommunikationsverbindungen. Hierüber lässt sich zu jeder Zeit die Konfiguration des gesamten Sicherheitsnetzes einsehen.

Hierzu werden in erster Linie Vorlagen verwendet, in denen die wesentlichen Funktionen normiert konfiguriert sind. Dieser Ansatz sorgt dafür, dass sich die Konfigurationen der einzelnen Kommunikationsinfrastruktur-Module möglichst wenig unterscheiden und insbesondere Sicherheitsfunktionen nicht durch Konfigurationsfehler kompromittiert werden.

Die Funktion "Status und die Sicherheitslage" gibt jederzeit darüber Auskunft, in welchem Zustand sich einzelne Verbindungen oder auch die ganze Sicherheitsschale befindet. Dazu wird regelmäßig der Status aller Kommunikationsinfrastruktur-Module abgefragt und deren Statusmeldungen ausgewertet.

Die Dokumentation bildet das Gedächtnis der Betriebsführung. Hier werden zum Beispiel alle Fehlerereignisse und deren Entstörungsverlauf gesammelt. Dadurch kann zum Beispiel nachgewiesen werden, dass Servicevereinbarungen nicht eingehalten wurden. Ebenso ist es möglich, Fehlerschwerpunkte zu identifizieren. Diese Informationen werden über das Berichtswesen aus der Dokumentation erzeugt.

Der Funktionsblock Datensicherung und Wiederanlauf stellt sicher, dass nach einem Ausfall einzelner Komponenten der Betriebsführung ein Wiederanlauf ohne Datenverlust möglich ist. Bei Totalausfall eines Standortes kann über diesen Mechanismus an einem Ersatz-Betriebsführungsstandort der Betrieb in kurzer Zeit wieder aufgenommen werden.

In diesem Zusammenhang ist es von besonderer Bedeutung, dass die Sicherheitsbetriebsführung für den Normalbetrieb der gesicherten Verbindungen zwischen den Kommunikationsinfrastruktur-Modulen nicht notwendig ist. Die Betriebsführung ist nur für Neuanschaltungen, eine beschleunigte Entstörung, schnellere Informationsverteilung und Dokumentation notwendig.

Da die Sicherheits- und die Netzwerkschicht für LST-Applikationen verwendet werden sollen, müssen die in den Schnittstellenbeschreibungen garantierten Sicherheitsparameter eingehalten und kontinuierlich überwacht werden. Die Einhaltung der Parameter wird dabei laufend dokumentiert. Diese Forderung ergibt sich aus dem Umstand, dass die Sicherheitsparameter in die Sicherheitsberechnungen des Gesamtsystems übernommen wurden und Teil der Zulassung sind.

Ebenso werden Fehlfunktionen offenbart, so dass auf Anwendungsebene entsprechende Maßnahmen eingeleitet werden können.

Die Unverlierbarkeit von Sicherheitsmerkmalen ist auf diese Weise über den Einsatzzeitraum der Module in der Überwachung und damit auch nachweisbar. Relevante Parameter einer Kommunikationsverbindung sind zum Beispiel die Bitfehlerrate, die zur Verfügung stehende Bandbreite und die Übertragungsverzögerung (Delay). In einem Übertragungssystem mit dynamischer Ressourcenverteilung, wie zum Beispiel einem ATM- oder IP-Netzwerk, sind die garantierten, die typischen und die schlechtesten Werte eines Parameters relevant.

Ein wesentlicher Betriebsführungsaspekt der Sicherheitsschicht ist, dass deren Funktionen ebenfalls überwacht werden. Es geht also nicht nur um die Verwaltung und Verteilung von Zertifikaten und Passwörtern, sowie die Lebendüberwachung der Sicherheitsendgeräte. Es wird zum Beispiel auch sichergestellt, dass die Verschlüsselung fehlerfrei funktioniert. Ein Fehlerereignis bei dem die Sicherheitsendgeräte miteinander kommunizieren, die Kommunikation aber unverschlüsselt übertragen, tritt nicht unerkannt auf. In diesem Fall wird dieser Fehler der Anwendung signalisiert. Die Betriebsführung erhält in diesem Fall zusätzlich einen Alarm mit dem Status der Verbindung. Diese Anforderung überwacht und garantiert die eigentliche Funktion der Sicherheitsschicht.

Die erfindungsgemäße Kommunikationsinfrastruktur stellt sichere Verbindungen zur Verfügung. Dazu wird sichergestellt, dass ein neues Modul sich gegenüber der Betriebsführung eindeutig identifiziert.

Gleichzeitig muss sich die Betriebsführung gegenüber dem Modul identifizieren, bevor neue Zertifikate und Konfigurationen geladen werden. Erst wenn eine sichere Verbindung zur Betriebsführung besteht, werden sichere Verbindungen für die LST-Applikationen etabliert.

Diese Erstkonfiguration wird auch bei Tausch einer Komponente, zum Beispiel nach Defekt, durchlaufen.

Im Gegensatz zu der heute gebräuchlichen, festen Verdrahtung von Kommunikationsverbindungen werden diese zukünftig über Übertragungstechnik konfiguriert werden. Die über Übertragungstechnik geschalteten Kommunikationsverbindungen werden separat als generische Produkte definiert und von einem Kommunikationsdienstleister angemietet.

Die Möglichkeit, die Kommunikationsverbindungen aus einer zentralen TK-Betriebsführung heraus zu ändern oder die Übertragungstechnikfunktion, Verbindungen automatisch neu zu schalten, um zum Beispiel das Netzwerk zu optimieren kann dazu führen, dass zum Beispiel redundante Verbindungen nicht mehr trassendisjunkt geführt werden, wie es die Verfügbarkeitsanforderung einer Anwendung voraussetzt. Daher müssen die Fehlermöglichkeiten technisch ausgeschlossen werden. Gleichzeitig erfordert dies eine regelmäßige Konfigurationsprüfung, um sicher zu stellen, dass die Anforderungen der Anwendungen während des Lebenszyklus erfüllt bleiben.

Die Kommunikationsinfrastruktur-Architektur besteht aus vielen Modulen, die in der Fläche paarweise oder in Sterntopologien gesicherte Verbindungen realisieren. Alle Module kommunizieren auch mit der zentralen Sicherheitsbetriebsführung. Im Sinne einer Katastrophenvorsorge kann die Sicherheitsbetriebsführung doppelt vorhanden sein, um die Verfügbarkeitsanforderungen der LST-Applikationen sicherzustellen.

Im Katastrophenfall ersetzt die Ersatz-Sicherheitsbetriebsführung die zentrale Sicherheitsbetriebsführung.

Die Datenbestände der beiden Sicherheitsbetriebsführungen werden dazu ereignisbezogen und kontinuierlich nach festen Vorgaben (der erforderliche Zeitrahmen wird durch eine Risikoanalyse ermittelt) abgeglichen. Die Umschaltung erfolgt manuell. Ebenso werden dann alle Module auf die Ersatz-Sicherheitsbetriebsführung umgeschaltet. Ein Modul schaltet nicht von sich aus auf die Ersatz-Sicherheitsbetriebsführung um, wenn es die Sicherheitsbetriebsführung nicht mehr erreicht.

Die Sicherheitsschale der Architektur wird nur bei Nutzung von offenen Netzwerken benötigt. Bei geschlossenen Netzwerken ist die sichernde Funktion der Sicherheitsschale nicht erforderlich. Die weiteren im erfindungsgemäßen Kommunikationsinfrastruktur-Modul hinterlegten Funktionen zur Überwachung der Schnittstellen und die erweiterten Betriebsführungsmöglichkeiten machen den Einsatz aber auch hier wirtschaftlich.

Die Erfindung ist anhand nachfolgender Figuren näher erläutert.
Fig. 1 zeigt das Schalenmodell der Kommunikationsinfrastruktur.
Fig. 2 zeigt das Zusammenspiel der Schalen an konkreten Standorten.

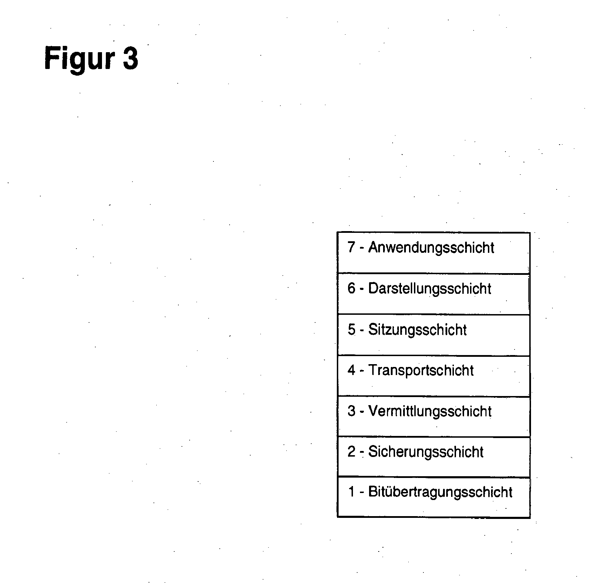

Fig. 3 zeigt das OSI-Referenzmodell.

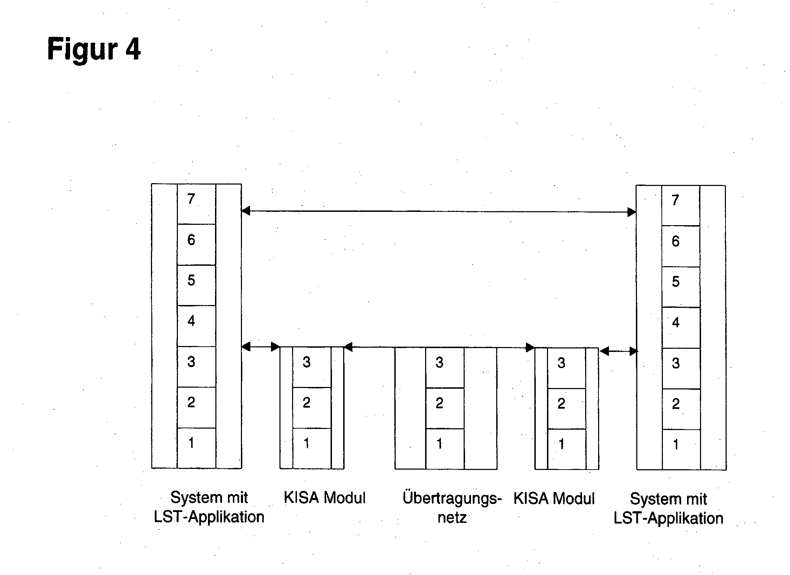

Fig. 4 zeigt die erfindungsgemäßen Kommunikationsinfrastruktur-Module im OSI-Schichtenmodell.

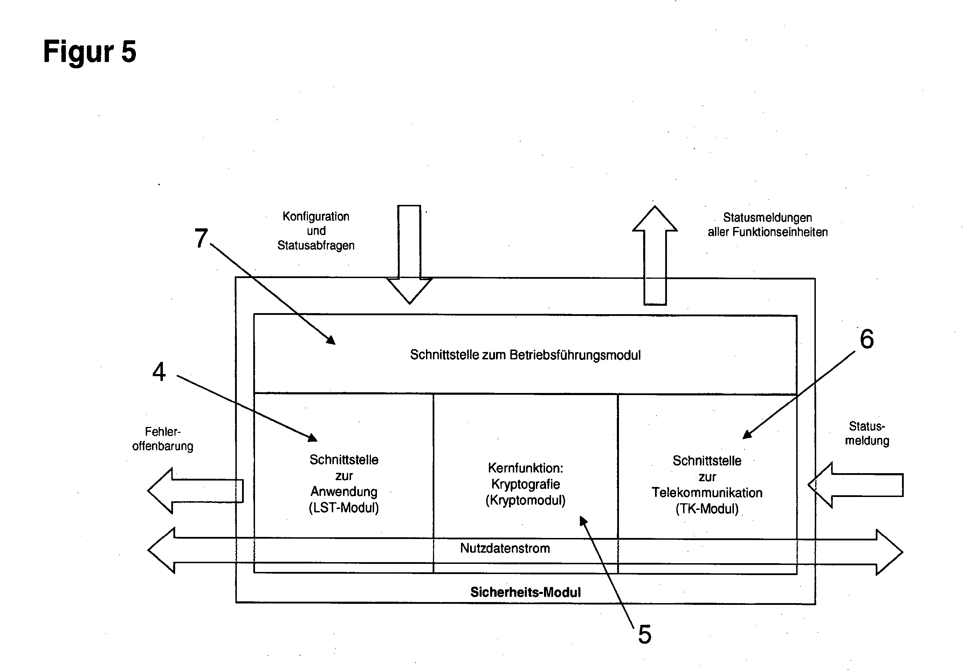

Fig. 5 zeigt schematisch die funktionale Darstellung des erfindungsgemäßen Kommunikationsinfrastruktur-Moduls (Sicherheitsmoduls).

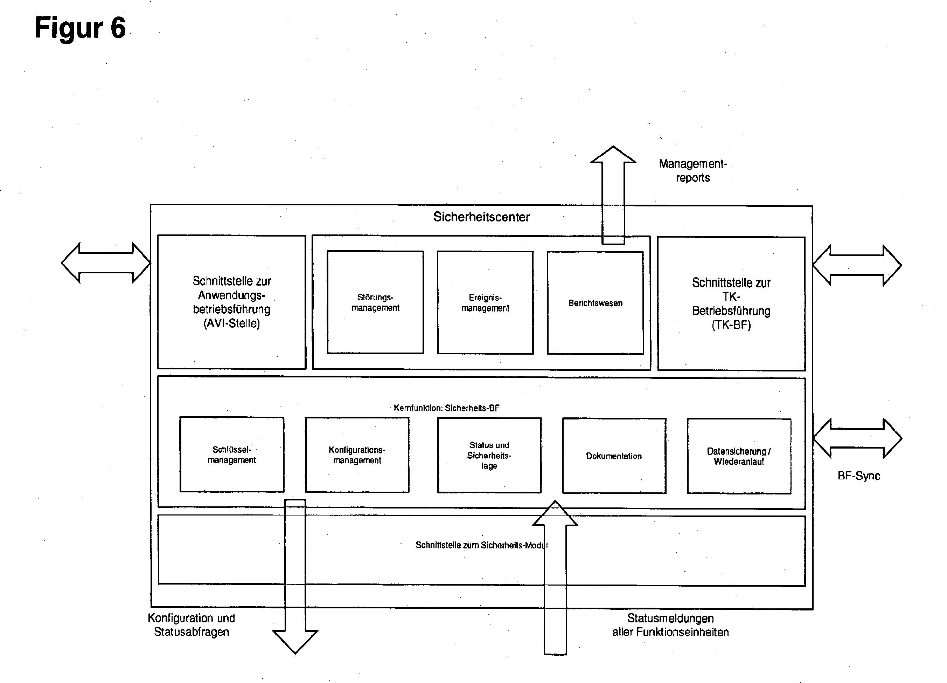

Fig. 6 zeigt schematisch die Sicherheitsbetriebsführung.

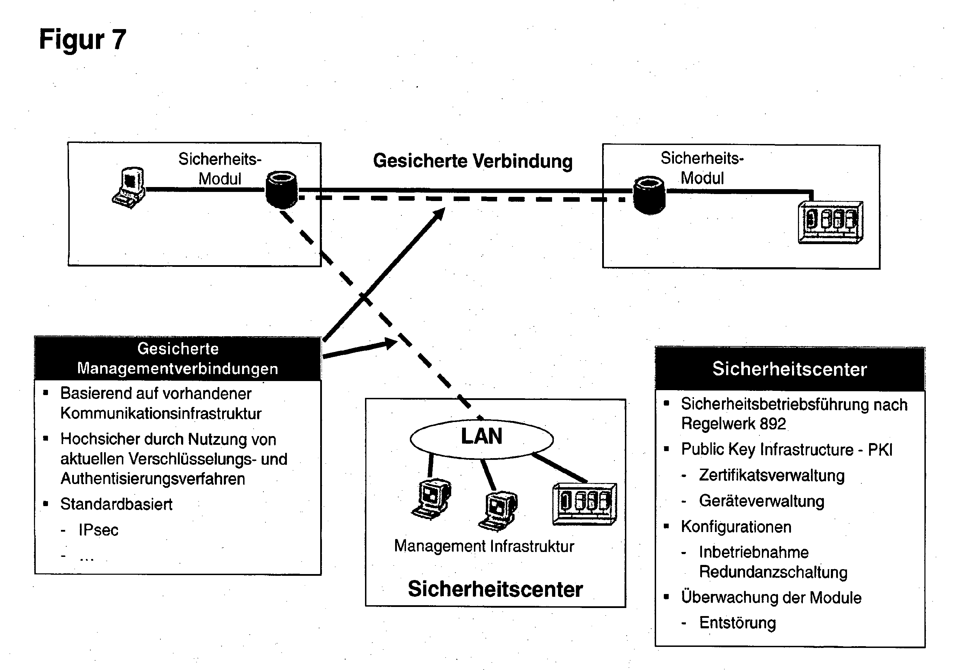

Fig. 7 zeigt schematisch das Zusammenspiel der Kommunikationsinfrastruktur-Module mit dem Sicherheitscenter.

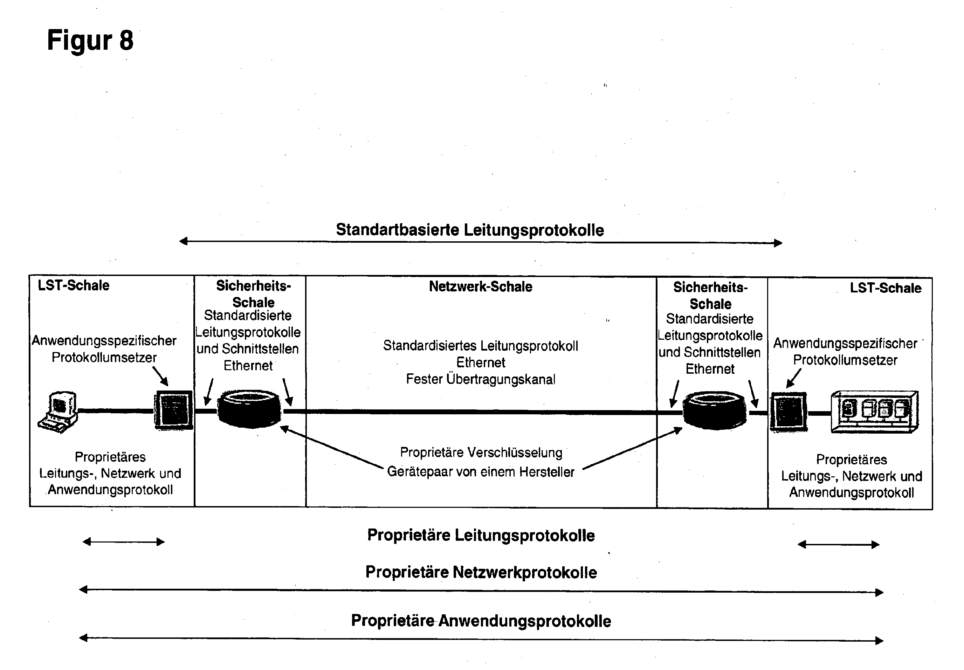

Fig. 8 zeigt eine technische Variante der erfindungsgemäßen Kommunikationsinfrastruktur mit anwendungsspezifischen Protokollumsetzern.

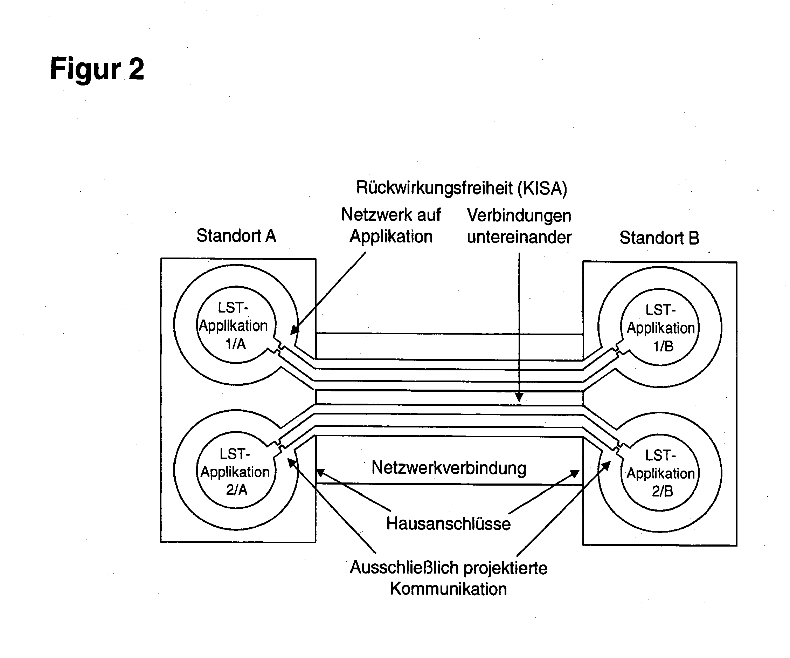

In einem erläuternden Beispiel ist im Folgenden und in Verbindung mit Figur 2 beschrieben, wie an einem Standort A zwei Anwendungen betrieben werden, die - zur Vereinfachung der Darstellung - jeweils mit Anwendungskomponenten an einem anderen Standort B kommunizieren müssen. Die beiden Kommunikationsverbindungen werden über eine Netzwerkinfrastruktur hergestellt. Für jede Anwendung wird jeweils eine Kommunikationsverbindung konfiguriert. Da beide Anwendungen als sicherheitsrelevant eingestuft wurden und es sich bei dem Netzwerk um ein offenes Netzwerk handelt, werden beide Kommunikationsverbindungen durch die Sicherheitsschale geschützt. Damit die beiden Anwendungen sich nicht beeinflussen, sind die Kommunikationsverbindungen rückwirkungsfrei.

Gleichzeitig ist eine Rückwirkung des Netzwerkes auf die LST-Applikationen ausgeschlossen. Es werden mit Hilfe der erfindungsgemäßen Kommunikationsinfrastruktur-Architektur nur bedarfsgerechte, projektierte und gesicherte Kommunikationspfade zwischen den Anwendungen bereitgestellt. Eine nicht geplante, automatische Konfiguration und somit ungewollte Kommunikationsbeziehungen werden dadurch ausgeschlossen.

Im Folgenden wird das kommunikationstechnische Zusammenspiel der LST-Applikationen mit den Kommunikationsinfrastruktur-Modulen anhand des OSI-Referenzmodell erläutert.

Die einzelnen Schichtennummern entsprechen den Schichtenbezeichnungen der folgenden Abbildung.

Den vollen Nutzen im Sinne von offenen Standards und marktgängigen Komponenten kann durch die erfindungsgemäße Kommunikationsinfrastruktur erzielt werden, wenn die LST-Applikation bereits IP-fähig sind. Ein Beispiel hierfür sind die ETCS-Applikationen.

## Patentansprüche

1. Kommunikationsinfrastruktur für Daten sicherheitsrelevanter Anwendungen im Bereich der Leit- und Sicherungstechnik, LST, von schienengebundenem Verkehr mit Hilfe eines offenen Übertragungssystems,
**dadurch gekennzeichnet, dass** die Sicherheit der Infrastruktur aufgeteilt ist in einen Security-Bereich (2) und einen Safety-Bereich (1), wobei die Kommunikationsinfrastruktur (3) eine Sicherheitsschale im Security-Bereich (2) festlegt, wobei im Wesentlichen die Funktionseinheiten LST-Modul (4), Krypto-Modul (5), Telekommunikationsmodul (6) und Betriebsführungsmodul (7) die Funktionen der Security-Schale (2) realisieren,
wobei
- das LST-Modul (4) konfiguriert ist, um die LST-Applikation über eine Fehlfunktion der Kommunikationsinfrastruktur (3) zu informieren,
- das Krypto-Modul (5) konfiguriert ist, um als Firewall zu arbeiten, der nur definierte Kommunikationspartner über definierte Protokolle kommunizieren lässt und sicherstellt, dass zulässige Kommunikationsverbindungen gegen Angriffe und Manipulationen geschützt sind,
- das Telekommunikations-Modull, TK-Modul, (6) über marktgängige Schnittstellen mit einem Telekommunikationsnetzwerk verbunden ist,
- das Betriebsführungsmodul (7) der Konfiguration, Fernüberwachung und Statusabfrage der Kommunikationsinfrastruktur- durch die Sicherheitsbetriebsführung dient,
wobei
- die oben genannten Module des Security-Bereichs (2) konfiguriert sind, um die Kommunikationsverbindungen eines standardisierten Netzwerkes, welches über standardisierte Schnittstellen bereitgestellt wird, zu sichern,
- die oben genannten Module des Security-Bereichs (2) an jedem Endpunkt eines zu sichernden Kommunikationsweges installiert sind,
- die Übergabe der Kommunikation an die LST-Applikationen an standardisierten Schnittstellen erfolgt.

## Claims

1. A communication infrastructure for data of security-relevant applications in the field of control command and signaling, LST, for railborne traffic with the aid of an open communication system, **characterized in that** the security of the infrastructure is divided into a security domain (2) and a safety domain (1), wherein the communication infrastructure (3) defines a security shell in the security domain (2), wherein the functional units LST-module (4), crypto-module (5), telecommunication module (6) and management module (7) essentially realize the functions of the security shell (2), wherein
- the LST-module (4) is configured for informing the LST-applications of a malfunction of the communication infrastructure (3),
- the crypto-module (5) is configured for operating as a firewall that only allows defined communication partners to communicate via defined protocols and ensures that authorized communication links are protected against attacks and manipulations,
- the telecommunication module, TK-module, (6) is connected to a telecommunication network via commercially available interfaces,
- the management module (7) serves for configuring, remotely monitoring and requesting information on the status of the communication infrastructure by security management,
- the aforementioned modules of the security domain (2) are configured for securing the communication links of a standardized network made available via standardized interfaces,
- the aforementioned modules of the security domain (2) are installed at each end point of a communication channel to be secured, and
- the transfer of the communication to the LST-applications takes place at standardized interfaces.

## Revendications

1. Infrastructure de communication pour données d'applications concernant la sécurité dans le domaine de la technique de conduction et de sécurisation (LST) du trafic ferroviaire à l'aide d'un système de transmission ouvert, **caractérisée en ce que** la sécurité de l'infrastructure est scindée en une partie sécurité (2) et une partie sûreté (1), l'infrastructure de communication (3) définissant une enveloppe de sécurité dans la partie sécurité (2), dans laquelle essentiellement les unités fonctionnelles module LST (4), crypto-module (5), module de télécommunication (6) et module de gestion d'activité (7) assument les fonctions d'enveloppe de sécurité (2), dans lequel
- le module LST (4) est configuré pour informer l'application LST via une fonction défaillante de l'infrastructure de communication (3),
- le crypto-module (5) est configuré pour faire office de pare-feu qui ne laisse communiquer que des partenaires de communication définis par des protocoles définis et garantit que les liaisons de communication autorisées sont protégées contre les attaques et manipulations,
- le module de télécommunication (module TK) (6) est relié par des interfaces courantes sur le marché à un réseau de télécommunication,
- le module de gestion d'activité (7) permet la configuration, la télésurveillance et l'interrogation de statut de l'infrastructure de communication par la gestion de l'activité de sécurité,
sachant que
- les modules précités de la partie sécurité (2) sont configurés pour sécuriser les liaisons de communication d'un réseau standardisé qui est mis à disposition par des interfaces standardisées,
- le transfert de la communication aux applications LST a lieu au niveau d'interfaces standardisées.
